# EUROPEAN PATENT APPLICATION

(11) **EP 4 734 089 A1**
(43) Date of publication of application: **29.04.2026**
(21) Application number: 24209119.7
(22) Date of filing: 28.10.2024
(51) Int. Cl.: G08B 17/00, G08B 29/18, G08B 31/00, G06N 3/126

(54) **METHODS AND APPARATUSES FOR PARAMETER TUNING OF A FIRE SPREAD MODEL AND PREDICTING WILDFIRE SPREAD FOR A SPECIFIC REGION**

(71) Applicant: OroraTech GmbH, 81669 München (DE)
(72) Inventor: GOTTFRIEDSEN, Julia, 81667 Munich (DE); LAUX, Dominik, 86179 Augsburg (DE); WAHBE, Johanna, 80335 Munich (DE)
(74) Representative: Michalski Hüttermann & Partner Patentanwälte mbB

(57) **Abstract**

According to the invention, a method of parameter training of a fire spread model predicting fire spread for a specific region is provided, the method comprising:
assigning (S101) default combustion parameters for the fire spread model, and
fine-tuning (S 102) the combustion parameters for the specific region through an iterative process.

In this way, solutions may be developed to efficiently obtain region-specific models to predict the evolution and spread of wildfires without the need for expert knowledge or a curated dataset, thus providing reliable fire spread models for any location on Earth within a short response time in the event of wildfire occurrences.

## Description

The invention relates to the technical field of fire spread prediction. Particularly, it relates to methods, apparatuses, computer program products and computer readable storage media for parameter tuning of a fire spread model and predicting wildfire spread for a specific region.

Wildfire detection has become an increasingly urgent issue as the frequency and severity of wildfires continue to rise globally. These natural disasters cause immense damage to ecosystems, wildlife, property, and human lives. Early and accurate detection of wildfires is critical in mitigating their destructive potential, allowing firefighting efforts to be deployed more effectively. However, wildfire detection remains challenging due to the complex and dynamic nature of fire behavior, which can vary significantly depending on weather conditions, fuel types, and topography.

Traditional methods of wildfire detection often rely on human observation, satellite imagery, or camera networks, each of which presents limitations. Human observation is labor-intensive and subject to delays, while satellite imagery, though providing broad coverage, is limited by resolution, cloud cover, and the frequency of satellite passes. Camera-based systems, though effective in localized regions, require significant infrastructure and may be limited by line-of-sight and environmental conditions such as smoke and haze. Furthermore, the unpredictable spread of wildfires due to wind changes or terrain variations complicates timely detection and response. As wildfires can spread rapidly, particularly in areas with dry fuel and favorable weather conditions, there is a critical need for improved systems that can detect and predict wildfires in real-time, providing precise and actionable data to minimize their impact.

Predicting the evolution of a wildfire is a complex task due to the numerous variables that influence fire behavior. Wildfires are highly dynamic, influenced by an interplay of factors including wind, topography, fuel moisture, and vegetation type. These variables can change rapidly, often unpredictably, making it difficult to anticipate how a fire will spread and where it will intensify.

One of the core challenges in wildfire prediction is the non-linear relationship between these factors. For instance, wind can cause a fire to spread quickly in one direction, only to shift unpredictably and drive the fire in another direction. Similarly, steep slopes can accelerate fire spread uphill, while changes in fuel types, such as transitioning from grasslands to forests, can dramatically alter the fire's intensity and rate of spread. The moisture content of the vegetation also plays a critical role; drier fuels ignite more easily and burn faster, but this can vary across even short distances due to microclimates or recent weather patterns.

Moreover, the scale and unpredictability of wildfires present additional difficulties. Fires that begin small can escalate rapidly under favorable conditions, overwhelming available resources and leading to erratic, extreme fire behavior that current models struggle to predict with precision. Existing models, while useful, often simplify these complex interactions, leading to predictions that can be less accurate in real-world scenarios. Consequently, there is a growing need for advanced systems that integrate real-time data and computational methods to more effectively predict wildfire evolution.

The document titled "A Mathematical Model for Predicting Fire Spread in Wildland Fuels" by Richard C. Rothermel (USDA, 1972) presents a model for predicting the spread and intensity of fires in wildland environments. The model utilizes fuel and weather parameters, which are measurable in the field, to generate quantitative predictions of fire behavior. It is designed to assess the rate of fire spread and intensity in surface fuels close to the ground, but not for crown fires. The model was initially developed for use in the National Fire-Danger Rating System, enabling land managers to appraise fire hazards and predict fire behavior under various environmental conditions. This model offers a mathematical framework that helps researchers and forest managers plan for and mitigate fire risks by simulating fire spread based on factors like wind, fuel type, and terrain. Key variables include fuel moisture, density, and the presence of combustible materials.

Therefore, the Rothermel model, developed in 1972, is a quasi-empirical framework designed to predict the spread of surface fires in wildland environments. It calculates fire behavior by considering various factors such as fuel characteristics, weather conditions, and terrain. The model is based on a heat transfer concept, where the rate of fire spread is determined by the balance between the heat generated by burning fuels and the heat required to ignite unburned fuel ahead of the fire. The Rothermel model primarily focuses on surface fires, meaning it applies to fuels near the ground like grass, shrubs, and litter but does not address crown fires or fires that occur in the upper canopy.

Over time, the model has been used extensively in fire management and prediction systems across the U.S. and internationally. Initially developed using experimental data from wind tunnel tests and small-scale burns, the model was designed to be simple enough for field applications. Early on, it became a key component of the U.S. National Fire Danger Rating System, providing a means to predict fire spread under various fuel and weather conditions. The original model was intended for dead fuels, with minimal consideration for live fuels, making it most applicable during peak fire seasons when dead, dry fuels dominate.

In the mid-1970s, the model was enhanced through contributions from researchers like Frank Albini. These improvements included adjustments to account for factors like fuel particle size, mineral content, and the presence of live fuels. Albini's modifications allowed the model to more accurately predict fire behavior by introducing weighting factors for different fuel classes and refining the relationship between fuel size and fire spread. These updates helped expand the model's applicability to a broader range of conditions, including live fuel involvement and different types of fuel beds.

In response to evolving fire management needs, additional fuel models were developed in the 2000s. The new models introduced a dynamic component, allowing for the transfer of live herbaceous fuel to dead fuel based on moisture content, which was a significant limitation in the original Rothermel model. This dynamic feature provides a more realistic representation of fire behavior during growing seasons when live fuels may contribute to fire spread. These models enable more accurate predictions for a wider range of fire conditions, including those that occur outside peak fire seasons and in more humid environments.

The model's evolution also includes its integration into various fire simulation systems, such as BehavePlus and FARSITE. These systems have extended the utility of the Rothermel model by allowing users to input real-time weather and fuel data to simulate fire behavior across landscapes. The model's enduring relevance is due to its adaptability, ease of use, and foundational role in wildland fire science. Despite its limitations, such as not addressing crown fires or post-frontal combustion, it remains a cornerstone in fire behavior prediction and continues to inform both research and practical fire management.

The document " Cristobal Pais, Jaime Carrasco, David L. Martell, Andres Weintraub2 and David L. Woodruff "Cell2Fire: A Cell-Based Forest Fire Growth Model to Support Strategic Landscape Management Planning" in Frontiers in Forests and Global Change, November 2021, Vol. 4" describes a cell-based forest fire growth model designed to aid strategic landscape management planning. The model divides the landscape into grid cells, each characterized by fuel, moisture, weather, and topographic conditions, and simulates fire growth based on these attributes. Cell2Fire uses existing fire spread models, such as the Canadian Forest Fire Behavior Prediction (FBP) system, to predict fire behavior. It is designed to support both individual fire growth simulations and larger-scale landscape management decisions, such as fuel treatment or harvesting plans. One of the key features of this model is its ability to integrate with strategic management models and to run efficiently on large spatial and temporal scales through parallel computing. The model was validated against real and hypothetical fire scenarios, showing high accuracy (over 90 %) compared to established simulators like Prometheus, while offering a speed advantage (up to 30 times faster). It supports forest management by helping to evaluate the impact of fuel treatments and road-building activities on fire spread and intensity, making it a valuable tool for reducing wildfire risks and improving landscape management strategies.

The document " Zechuan Wu, Bin Wang, Mingze Li, Yuping Tian, Ying Quan, and Jianyang Liu "Simulation of Forest Fire Spread Based on Artificial Intelligence", in Ecological Indicators 136 (2022)", presents an innovative approach to predicting forest fire spread using an artificial neural network (ANN) model. The study focuses on the Heilongjiang Province in China, an area with diverse and complex landscapes prone to forest fires. The authors develop a data-driven forest fire spread model incorporating multiple environmental factors, such as climate, terrain, vegetation, and land cover types. The ANN-based model outperforms traditional fire spread models by considering the non-linear and dynamic nature of fire propagation, achieving an average prediction accuracy of 85.02 %. The model is also compared with the Wang Zhengfei-CA model, and the ANN model is found to provide better accuracy in predicting forest fire peaks and spread. The research contributes to more effective fire management and control strategies, enhancing the ability of forest managers to predict and respond to forest fires with greater precision.

Conventional wildfire prediction models require localized, fine-grained input data, expert knowledge, and extensive manual calibration to adjust combustion parameters. This makes them inefficient, particularly in regions where such detailed data is unavailable. Moreover, traditional models often struggle to adapt to the varying environmental conditions, resulting in less accurate predictions.

Therefore, the object of the invention is to address these challenges by providing a wildfire prediction method that provides a reliable outcome without the need for manual tuning.

This object is addressed by the subject matter of independent claims. Embodiments of the invention are described in the dependent claims.

According to a first aspect of the present invention, a method of parameter training of a fire spread model that predicts fire spread for a specific region is provided. The method proposes assigning default combustion parameters to the fire spread model and fine-tuning the combustion parameters for the specific region through an iterative process.

This method, at least partially, may be a computer-implemented method. The fire spread model can be used to predict the evolution and spread of wildfires.

In this embodiment, the fire spread model is initially parameterized using general datasets and then automatically optimized for the specific region without requiring expert knowledge or curated datasets. This approach enhances the computational efficiency of training the model while accurately accounting for region-specific fire behavior.

In one optional embodiment, the combustion parameters are fine-tuned using machine learning based exploration for the specific region. The machine learning based exploration often involves using machine learning models to make decisions or predictions on the combustion parameter, specifically, it may involve reinforcement learning techniques or optimization and search algorithm.

In this case, the usage of machine learning based exploration improves the efficiency and accuracy of the optimization of the combustion parameters for the specific region, which further enables the exploitation of the fire spread model in real-time wildfire spread prediction.

Optionally, the combustion parameters are fine-tuned using genetic algorithms and/or Bayesian optimization methods for the specific region. The method further proposes validating the performance of the fire spread model for the specific region after each step of fine-tuning.

As genetic algorithm and Bayesian optimization methods are advanced in exploring large parameter spaces, they facilitate finding optimal solutions without exhaustively searching every possibility. In addition, the validation after each search step enables the earlier detection of errors and issues, which facilitates convergence and improves accuracy of the searching algorithm which prevents overfitting or underfitting.

In a specific embodiment, the validation of the performance of the fire spread model is implemented by comparing a fire spread simulation of the fire spread model with a wildfire dataset acquired from an active wildfire cluster database.

In this embodiment, each search step is validated to see if and by how much the performance of the fire spread model is increased by comparing the fire spread simulation with datasets from active wildfire database. The active wildfire database can provide global coverage of wildfire vector datasets, which are updated at least every few hours, thereby enabling the optimization of the fire spread model for anywhere on earth. Optionally, the iteratively fine-tuning of the combustion parameters is terminated when a deviation between the fire spread simulation and the acquired wildfire dataset is within a pre-determined range. For example, when a difference or a mean squared error between the simulation and the wildfire dataset falls within an acceptable range, the method determines that the combustion parameters are fine-tuned and terminates the iteration process.

By setting termination criteria, it is possible to balance the parameter training efficiency and the desired prediction accuracy of the model, thereby improving the adaptability and flexibility of the parameter training method.

In one embodiment, the fire spread model is an empirical fire spread model. Specifically, the fire spread model may be a Rothermel Surface Spread model. The Rothermel Surface Spread model can be the basic model developed for one size class of dead fuel with the no wind, no slope rate of spread adjusted for the effects of wind and slope, or the final fire spread model which includes weighting factors for live and dead fuel of multiple fuel classes.

As discussed above, the Rothermel Surface Spread model is a mathematical model predicting the rate of fire spread in wildland fuels and the input parameters may include fuel characteristics, environmental conditions, and terrain factors. The combustion parameters may represent the fuel characteristics and serve as the input for the Rothermel Surface Spread model.

In one embodiment, the combustion parameters may comprise at least one of: fuel bed depth, dead fuel density, moisture content of dead fuel, surface area-to-volume ratio of dead fuel and heat of combustion of the fuel.

In this case, it is possible to optimize any combination of the combustion parameters jointly or independently and further enhance the adaptability and flexibility for parameterization of the fire spread model.

Optionally, the inputs of the fire spread model may include different fuel classes. The property of each fuel class is characterized by the combustion parameters and the method proposes assigning default combustion parameters to each fuel class and fine-tune the combustions parameters jointly. Different fuel classes may have different default combustion parameters.

Assigning default combustion parameters corresponding to the fuel class avoids random initialization of the model and may further increase the efficiency of the parameter training.

In one embodiment, the underlying fire spread model may include eleven fuel classes. These eleven fuel classes may be categorized based on the ESA WorldCover project, led by the European Space Agency (ESA), and include: tree cover, shrubland, grassland, cropland, built-up area, bare/sparse vegetation, snow and ice, permanent water bodies, herbaceous wetlands, mangroves, and moss and lichen.

According to a second aspect of the present invention, a method of predicting fire spread for a specific region is provided. The method proposes training the parameters of a fire spread model according to the methods disclosed in the first aspect of the present invention and then delivering a fire spread prediction of the specific region using the fine-tuned fire spread model.

In this embodiment, once a wildfire occurs in a specific region, a region-specific fire spread model that predicts the evolution of the wildfire for that region can be parameterized by fine-tuning the combustion parameters according to the parameter training method disclosed above. Since the training of the model does not require expert knowledge or a curated dataset, it is possible to optimize model parameters efficiently, thus enabling real-time wildfire monitoring and prediction with a short response time.

According to a third aspect of the present invention, an apparatus for parameter training of a fire spread model predicting fire spread for a specific region is provided. The apparatus comprises a training module configured to train combustion parameters of the fire spread model according to the steps of the parameter training method as disclosed above.

According to a fourth aspect of the present invention, an apparatus for predicting fire spread for a specific region is provided. The apparatus comprises a training module which is configured to train the combustions parameters of the fire spread model according to the steps of the parameter training method as disclosed above. The apparatus further comprises a predicting module which is configured to deliver a fire spread prediction for the specific region using the fire spread model with fine-tuned combustion parameters.

According to a fifth aspect of the present invention, a computer program product comprising instructions which, when the program is executed by a computer, cause the computer to carry out the steps of any of the parameter training method or the fire spread predicting method as discussed above is provided.

According to a sixth aspect of the present invention, a computer-readable storage medium comprising instructions which, when executed by a computer, cause the computer to carry out the steps of any of the parameter training method or the fire spread predicting method as discussed above is provided.

These and other aspects of the invention will be apparent from and elucidated with reference to the embodiments described hereinafter. Such an embodiment does not necessarily represent the full scope of the invention, however, and reference is made therefore to the claims and herein for interpreting the scope of the invention.

In the drawings
- Fig. 1: schematically depicts a flow chart of the parameter training method according to one embodiment of the present invention,
- Fig. 2: schematically depicts a flow chart of the fire spread predicting method according to another embodiment of the present invention,
- Fig. 3: schematically depicts a block diagram of the parameter training apparatus according one embodiment of the present invention, and
- Fig. 4: schematically depicts a block diagram of the fire spread predicting apparatus according to one embodiment of the present invention.

Exemplary embodiments will be described in detail herein, examples of which are shown in the accompanying drawings. Unless otherwise indicated, when the following description refers to the drawings, the same numbers in different drawings represent the same or similar elements. The embodiments described in the following exemplary embodiments do not represent all embodiments consistent with the present invention. Instead, they are merely examples of devices and methods consistent with some aspects of the present invention as detailed in the appended claims.

As discussed above, fire spread models usually require detailed combustion parameters that are highly specific to location and vegetation, and the performance of a model depends heavily on the availability and quality of the required data. However, since only very general datasets are available, conventional models are either overly generalized or hyperlocal, requiring extensive expert knowledge or manually curated datasets for parameterization. Thus, it is necessary to develop training methods parameterizing physical boilerplate models to provide region-specific fire spread prediction within a short response period.

According to an embodiment of the present invention, the parameter training method for the fire spread model which predicts fire spread for a specific region comprises the following steps:
S101: assigning default combustion parameters for the fire spread model, and
S102: fine-tuning the combustion parameters for the specific region through an iterative process.

The method can be computer-implemented and can be integrated to systems that monitor and predict wildfire locally or globally, for example, wildfire monitoring servers or distributed computational equipment. The fuels can be dead fuels and live fuels.

Combustion parameters are approximations of the physical properties determining how different wildfire fuels burn. These include aspects such as the energy released during burning or the moisture and mineral content of different fuels. The parameters help determine the intensity, spread, and sustainability of combustion. They are relevant for modeling fire behavior and predicting spread patterns. During the iterative process, the combustion parameters of the fire spread model are adjusted and validated iteratively until the performance of the fire spread model meets the expected criteria.

In a specific embodiment, machine learning based approaches are exploited to optimize the combustion parameters of the fuel spread model. The parameter training method then comprises the step:
S1021: fine-tuning the combustion parameters using machine learning based exploration for the specific region.

As there are no reference parameter sets, an unsupervised learning approach may be used. For example, reinforcement learning techniques or optimization algorithms like Bayesian optimization methods and genetic algorithms may be used to explore the parameter space and determine the optimized combustion parameters based on the performance of the fire spread model.

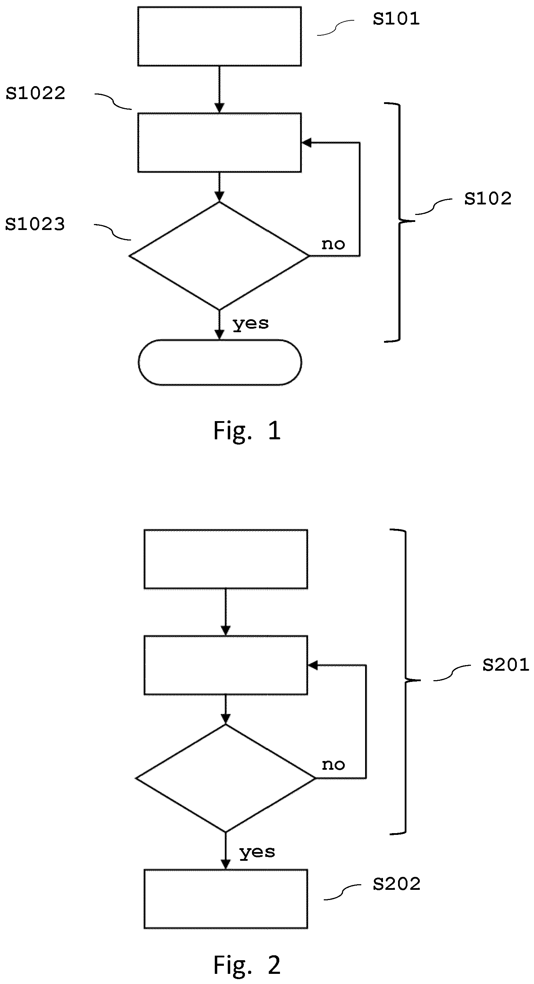

Fig.1 depicts a specific embodiment according to the present invention. In this embodiment, the iteratively fine-tuning of the combustion parameters comprises the steps:
S1022: fine-tuning the combustion parameters using genetic algorithms and Bayesian optimization methods for the specific region, and
S1023: validating the performance of the fire spread model for the specific region after each step of the fine-tuning.

In this specific embodiment, genetic algorithms and Bayesian optimization methods are used to explore the space of potential combustion parameters. It is assumed that there is at least one local optimum (i.e. best set of parameters) that minimizes the loss function and maximizes the objective function, i.e. in the present case leads to the highest intersection over union of the predicted and detected fire perimeters at different timesteps. In the beginning, each fuel class is assigned a default set of combustion parameters from literature. Then evolutionary (genetic) and Bayesian optimization algorithms are applied to find better parameters than the default set.

Bayesian optimization:
- Gaussian process is used as a surrogate model approximating the objective function
- Search for the next set of parameters by exploration (searching new areas of the function space) and exploitation (refining the current known good areas)

Genetic algorithm:
- Simulate the process of genetic inheritance / natural selection
- Search for the next set of parameters by generating a new "generation" of parameters by selection (selecting a healthy "parent" generation), crossover (combining information from different parents) and mutation (randomly mutating parameters)

Genetic algorithms, inspired by natural evolution, excel at exploring a large and complex solution space, making them suitable for searching for the global optimum of the combustion parameters. The Bayesian optimization method offers efficiency in high-cost evaluation scenarios and minimizes the number of function evaluations needed to find the optimum, thereby saving computational resources.

Then after each optimization step, the method validates the optimization of the fire spread model for the specific region to check if and by how much the performance is increased. Based on the validation, the method may determine when to terminate the iteration process. Specifically, the validation may be executed the step:
S1024: comparing a fire spread simulation of the fire spread model with wildfire dataset acquired from an active wildfire database.

In this case, the combustion parameters optimized in each step are used to deliver a fire spread simulation and compared with actual wildfire evolution datasets recorded. The database may provide global active wildfire datasets in terms of spatial and temporal resolution and availability, and it is updated at least every few hours. In this term, the performance of the parameter training is validated based on up to date wildfire records in the specific region and the fine-tuned model obtained may be a best fit to the real-world scenario.

In one embodiment, if the validation indicates that the performance of the model does not meet the expectation, the methods may continue and repeat the fine-tuning step to find other solutions of the combustion parameters. In the contrary, once the expected performance is achieved, the method may terminate the iteration process. The parameter training method further comprises the step:
S1025: terminating the iterative process in response to a deviation between the fire spread simulation and the acquired wildfire dataset is within a pre-determined range.

The termination criteria may be pre-configured and may be in relation to the performance of the model. For example, the method may decide to terminate the iteration when a difference or a mean squared error between the fire spread simulation and the acquired wildfire dataset is within an acceptable range. Other termination criteria can also be configured, for example, the maximum number of iterations, e.g. 20, and/or the time of the iteration.

In some embodiments, the fire spread model for which the combustion parameters are trained can be any empirical or semi-empirical models. For any model requiring combustion parameters as input, it is possible to formulate the fine-tuning of the combustion parameters as a mathematical optimization task and to find the optimal using the iteration steps as disclosed above.

In a specific embodiment, the fire spread model can be the Rothermel Surface Spread model, which is widely used to predict the evolution of wildfires. The Rothermel Surface Spread model may be a basic model that considers only fuel parameters, or it may be a later developed model that also takes wind and terrain influence into account.

The combustion parameters used to characterize different fuels may comprises at least one of the following: fuel bed depth, dead fuel density, moisture content of dead fuel, surface area-to-volume ratio of dead fuel, bulk density of dead fuel, and heat of combustion.

The fuel bed depth may describe the average height of surface fuels in the combustion zone of a spreading fire front. The dead fuel density may refer to the density of individual particles of dead fuels, expressed in units of mass per volume, and is used to calculate the packing ratio and related fuel/oxygen mixture variables. The moisture content of dead fuel may describe the percentage of moisture within the dead fuel and is crucial for calculating the heat of pre-ignition. The surface area-to-volume ratio of dead fuel may describe the ratio of the surface area of the dead fuel to its volume. This ratio influences combustion efficiency, as fuels with a higher surface area are easier to ignite. The bulk density of dead fuel may refer to the mass of fuel per unit of fuel bed volume, which is measured at 0% humidity, excluding mineral mass. The heat of combustion may describe the energy released per unit mass of fuel burned. The choice of combustion parameters could depend on the fire spread model to be fine-tuned. Other combustion parameters, such as fuel load and live fuel moisture, can also be included.

In some embodiments, when the fire spread model requires different fuel classes as input, the method further comprises the step:
S1011: assigning default combustion parameters for each fuel class of the fire spread model.
Different fuel classes may have different default combustion parameters. By assigning correct default combustion parameters to corresponding fuel class, it is possible to facilitate the optimization in correct direction and further improve the efficiency of the training.

In a specific embodiment, the fire spread model to be parameterized may comprise 11 fuel classes. These eleven fuel classes may be categorized based on the ESA WorldCover project, which include: tree cover, shrubland, grassland, cropland, built-up area, bare/sparse vegetation, snow and ice, permanent water bodies, herbaceous wet-lands, mangroves, and moss and lichen. Other fuel classes can also be included.

Fig. 2 depicts a method of predicting fire spread for a specific region according to another embodiment of the present invention. In this embodiment, the fire spread model is first parametrized according to the parameter training method as shown in Fig. 1 and is then directly used for delivering a fire spread prediction for the specific region. The method comprises the following steps:
S201: training combustion parameters of a fire spread model using the parameter training method according to the parameter training method described above, and
S202: delivering a fire spread prediction for the specific region using the fire spread model with the fine-tuned combustion parameters.

Specifically, in this embodiment, once wildfire occurs in a specific region, the fire spread model is assigned with default combustion parameters and the combustion parameters are fine-tuned in an iteration process using the machine learning based approach, such as genetic algorithms and Bayesian optimization method. The performance of the model can be validated through onsite wildfire dataset monitored in real time. Once the model is fine-tuned, it can be directly used for the prediction of wildfire evolution in the specific area. With this approach, it is then possible to obtain region-specific fire spread model for arbitrary areas on the earth and provide accurate fire predictions within a noticeably short response period.

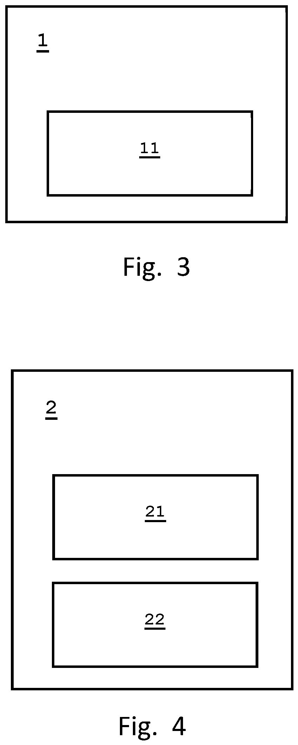

Fig. 3 is a block diagram of an apparatus 1 for parameter training of a fire spread model that predicts fire spread for a specific region. The apparatus 1 comprises a training module 11 configured to perform the steps of any of the parameter training methods disclosed above.

Specifically, the training module 11 is configured to assign default combustion parameters to the fire spread model and execute the iterative process to fine-tune the combustion parameters as described above. The apparatus 1 can be any device capable of computation, such as laptops, desktops, servers, embedded systems, and cloud computing platforms.

Fig. 4 is a block diagram of an apparatus 2 for predicting fire spread for a specific region. The apparatus 2 comprises a training module 21 configured to train the combustion parameters of a fire spread model for the specific region according to the parameter training method described above. The apparatus 2 further comprises a predicting module 22, which uses the fire spread model fine-tuned by the training module 21 to deliver a fire spread prediction for the specific region. The apparatus 2 can be any device capable of computation, such as laptops, desktops, servers, embedded systems, and cloud computing platforms. The apparatus 2 can also be applied to any real-time wildfire monitoring platforms.

Additionally, the present invention provides a computer program product comprising instructions which, when executed by a computer, cause the computer to carry out the steps of the parameter training and/or the fire spread prediction methods according to any of the embodiments described above.

The present invention also provides a computer-readable storage medium comprising instructions which, when executed by a computer, cause the computer to carry out the steps of the parameter training and/or the fire spread prediction methods according to any of the embodiments described above.

## Claims

1. Computer-implemented method of parameter training of a fire spread model predicting fire spread for a specific region, the method comprising:
assigning (S101) default combustion parameters for the fire spread model, and
fine-tuning (S102) the combustion parameters for the specific region through an iterative process.

2. Method of parameter training of the fire spread model according to claim 1, wherein the fine-tuning of the combustion parameters comprises:
fine-tuning (S1021) the combustion parameters using machine learning based exploration for the specific region.

3. Method of parameter training of the fire spread model according to any of the claims 1 or 2, wherein the fine-tuning of the combustion parameters comprises:
fine-tuning (S1022) the combustion parameters using genetic algorithms and/or Bayesian optimization methods for the specific region, and
validating (S1023) the performance of the fire spread model for the specific region after each step of the fine-tuning.

4. Method of parameter training of the fire spread model according to claim 3, wherein validating of the performance comprises:
comparing (S1024) a fire spread simulation of the fire spread model with wildfire dataset acquired from an active wildfire database.

5. Method of parameter training of the fire spread model according to claim 4, wherein the fine-tuning of the combustion parameters further comprises:
terminating (S1025) the iterative process in response to a deviation between the fire spread simulation and the acquired wildfire dataset is within a pre-determined range or after a pre-determined number of iterations.

6. Method of parameter training of the fire spread model according to any of the claims 1 - 5, wherein the fire spread model is an empirical fire spread model.

7. Method of parameter training of the fire spread model according to any of the claims 1 - 6, wherein the fire spread model is a Rothermel Surface Spread model.

8. Method of parameter training of the fire spread model according to any of the claims 1 to 7, wherein the combustion parameters comprise at least one of:
fuel bed depth,
dead fuel density,
moisture content of dead fuel,
surface area-to-volume ratio of dead fuel,
bulk density of dead fuel, and
heat of combustion.

9. Method of parameter training of the fire spread model according to any of the claims 1 to 8, wherein the assigning default combustion parameters comprises:
assigning (S1011) default combustion parameters for each fuel class of the fire spread model.

10. Method of parameter training of the fire spread model according to claim 9, wherein the fire spread model comprises 11 fuel classes which comprise:
tree cover,
shrubland,
grassland,
cropland,
built-up area,
bare/sparse vegetation,
snow and ice,
permanent water bodies,
herbaceous wetlands,
mangroves, and
moss and lichen.

11. Computer-implemented method of predicting fire spread for a specific region comprising:
training (S201) combustion parameters of a fire spread model using the method according to any of claims 1 to 10, and
delivering (S202) a fire spread prediction for the specific region using the fire spread model with the fine-tuned combustion parameters.

12. Apparatus (1) of parameter training of a fire spread model predicting fire spread for a specific region, the apparatus comprising:
a training module (11) configured to train combustion parameters of the fire spread model according to the method of any of the claims 1 to 10.

13. Apparatus (2) of predicting fire spread for a specific region, the apparatus comprising:
a training module (11, 21) configured to train combustion parameters of a fire spread model according to the methods of any of the claims 1 to 10, and
a predicting module (22) configured to deliver a fire spread prediction for the specific region using the fire spread model.

14. Computer program product comprising instructions which, when the program is executed by a computer, cause the computer to carry out the steps of the method according to any of the claims 1 to 10, or carry out the steps of the method according to claim 11.

15. Computer-readable storage medium comprising instructions which, when executed by a computer, cause the computer to carry out the steps of the method according to any of the claims 1 to 10, or carry out the steps of the method according to claim 11.
